(19) Europäisches Patentamt

European Patent Office

Office européen des brevets

(11) **EP 1 323 317 B1**

(12) **EUROPEAN PATENT SPECIFICATION**

(45) Date of publication and mention
of the grant of the patent:
**23.08.2006 Bulletin 2006/34**

(51) Int Cl.:
*H04Q 7/20* (2006.01)    *G01S 5/14* (2006.01)
*G01S 1/00* (2006.01)    *H04Q 7/38* (2006.01)

(21) Application number: **01910783.8**

(22) Date of filing: **16.02.2001**

(86) International application number:
**PCT/US2001/004961**

(87) International publication number:
**WO 2001/076284 (11.10.2001 Gazette 2001/41)**

(54) **DISTRIBUTED LOCATION SYSTEM**

VERTEILTES ORTSBESTIMMUNGSSYSTEM

SYSTEME DE LOCALISATION DISTRIBUE

(84) Designated Contracting States:
**AT BE CH CY DE DK ES FI FR GB GR IE IT LI LU
MC NL PT SE TR**

(30) Priority: **03.04.2000 US 194035 P**

(43) Date of publication of application:
**02.07.2003 Bulletin 2003/27**

(73) Proprietor: **Cellguide Ltd.
76703 Rehovot (IL)**

(72) Inventors:
• **NIR, Joseph
76302 Rehovot (IL)**

• **SHAYEVITS, Baruch
75229 Rishon Lezion (IL)**
• **COHEN, Baruch
75286 Rishon Lezion (IL)**

(74) Representative: **Modiano, Micaela Nadia
Modiano, Josif, Pisanty & Staub Ltd.,
Baaderstrasse 3
80469 München (DE)**

(56) References cited:
WO-A-00/10028          WO-A-97/23785
WO-A-99/21028          WO-A-99/61934
US-A- 5 960 355        US-A- 5 973 643
US-A- 5 983 109        US-A- 6 070 078
US-B1- 6 185 427       US-B1- 6 188 351

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**FIELD OF THE INVENTION**

The present invention relates generally to methods for locating mobile units of unsynchronized cellular network systems. More particularly the present invention deals with location methods based on signals of cellular base stations and navigation satellites.

**BACKGROUND OF THE INVENTION**

The travel time of a signal from a radio source to a receiver of the source is used for ranging purposes. The travel time of the signal from the radio source having a known geographic location, to a receiver having an unknown location is measured, and multiplied by the speed of light to determine the distance between the radio source and the receiver. Common commercial navigation methods employ navigation satellites, typically of the GPS system, as radio sources. In the case of satellites however, the range between the receiver and a number of satellites is not enough for calculating geographical position of the receiver. Once the ranges to various satellites become known, the exact position of the satellites with respect to the earth at the exact time of range measurement must be taken into consideration and used as an input for calculating the geographical location of the receiver. In location systems that employ the signals of cellular networks as radio sources for navigation purposes, base stations (BTSs) are used as radio sources. The base stations are static and their geographic location are registered once, and loaded to a memory of the system. In WO- 99 - 21028 a method is disclosed for locating a mobile unit of a digital telephone system, in which a reference receiver positioned at a known location receives signals of BTSs (base transceiver stations) of the telephone system, each having a known location. Another receiver, of unknown location receives the same signals and by calculating the time offsets between the respective reception times in each receiver, location is determined. Another method, disclosed in WO - 99 - 61834 utilizes transmitted downlink signals of BTSs of a cellular network, utilizing them as ranging measurements. This invention also uses the signal of GPS satellites in combination with the cellular network based ranging approach. In this invention both signal sources are used to determine location of a mobile transceiver of the network.

WO 00/10028 discloses a system for aiding GPS receivers via an unsynchronized mobile network. A fixed Timing Measurement Unit, placed at a known coordinate, is operative to time stamp BTS transmissions with GPS time and to transmit the resulting relationships to a Mobile Location Center.

**SUMMARY OF THE INVENTION**

An object of the present invention is to provide a ranging system for determining a location of a mobile unit of a cellular system in which at least one other mobile unit is assigned for a reference unit of the network.

A further object of the present invention is to provide a method for using assigned mobile units for determining a location of other mobile units of the same unsynchronized cellular network. The required synchronization of the respective signals of the cellular BTSs (base stations) is achieved in a common assigned mobile unit by first receiving each signal by that mobile unit. The received signals bear each identifiable timing references which enable a synchronization to be made between each of the respective signals, all referenced to the clock of the receiving MU. One or more navigation satellite signals can be used as well as the BTS signals. If enough satellites are received, the geographical position of the assigned mobile unit can be determined independently and be sent to the location processing unit of the network together with the synchronization information of the BTSs signals.

Another object of the present invention is to provide a method for determining the location of a mobile receiver, by exploring information provided by an assigned mobile receiver. Such information is combined with the information obtained by a mobile unit in a calculation center to determine the location of the mobile unit.

The above objects are achieved by the system of claim 1 and the method of claim 4.

**BRIEF DESCRIPTION OF THE DRAWINGS**

Fig. 1 is a schematic layout of the components of a system within which the present invention is implemented;
Fig. 2A is a flow chart describing the sequence of events taking place in the updating of a location server according to a preferred embodiment of the present invention;
Fig. 2B is a flow chart describing the sequence of events taking place in the updating of a location server, without reference unit being able to find enough satellites to fully determine its location;
Fig. 3 is a flow chart describing the sequence of events taking place further to the issuance of a request to locate a mobile unit.

## DETAILED DESCRIPTION OF THE PRESENT INVENTION

In accordance with the present invention, receivers of cellular network systems are located by using ranging methods which employ transmitted signals of radio **sources.**

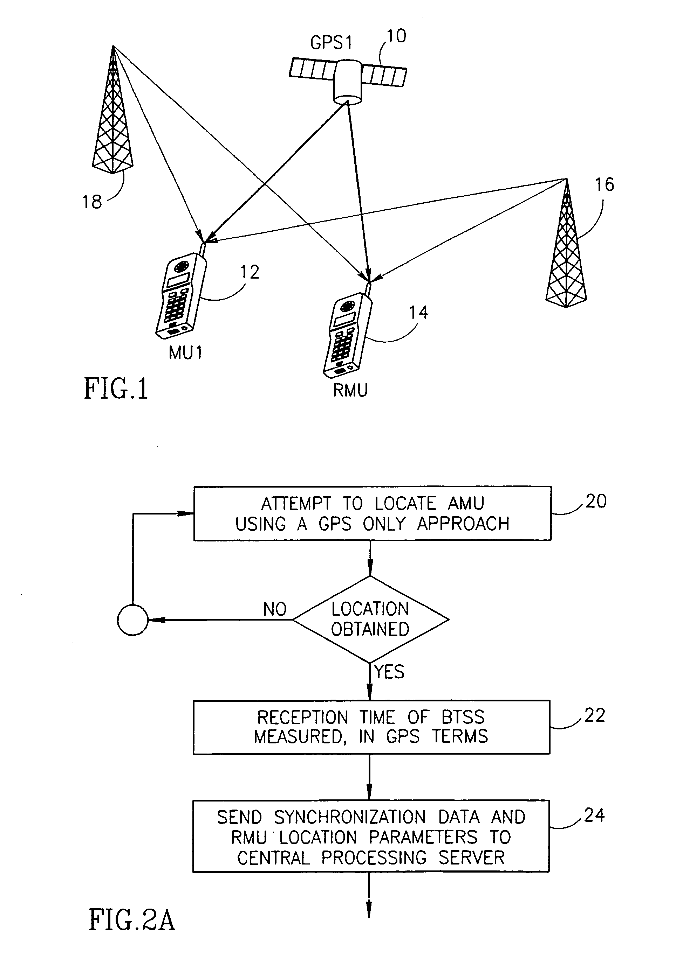

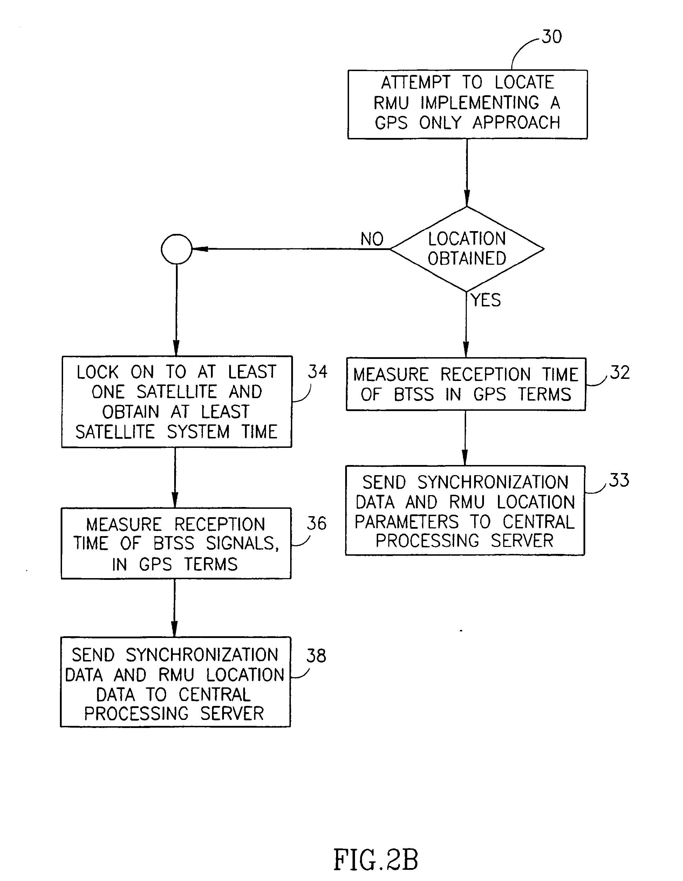

In a system of the present invention, MUs (mobile units) are allocated for use as provisional synchronizing elements of the network. Thus, an AMU (allocated MU), according to a preferred embodiment of the present invention, when active, becomes a RMU (reference mobile unit) which constantly updates its position preferably by regular GPS oriented measurements. The present invention also provides for conditions in which a full set of satellites required by any or all the MUs involved is not available. According to an embodiment of the present invention, the RMU extracts from the navigation satellite system at least satellite system time and makes it available for synchronizing signals of a cellular network. **Fig. 1** describes schematically a minimal setup in which the present invention is implemented. Signals of a navigation satellite **10,** typically a GPS satellite, are received by a MU **12** and by an **RMU 14.** The two mobile units also receive signals of BTSs (base stations) **16** and **18**. **Fig. 2A** to which reference is now made, describes a sequence of events in accordance with a preferred embodiment of the invention that are carried out for the purpose of updating the location parameters of a RMU. In step **20** the RMU attempts to locate itself by GPS only reference. These attempts are repeated until the RMU is located. Such an approach is especially suitable for mobile units situated in open areas or moving units with a portion of their path located in open places. In step **22.** The RMU measures the reception times of identifiable frames of available BTSs of a local cellular network, relative to the satellite system time signal. This will synchronize the transmission timing of the available BTSs with the satellite system time. The updated synchronization information is sent to a processing unit in a central location server of the network, as well as the location parameters of the RMU, in step **24.** In another embodiment of the invention, described in **Fig. 2B** to which reference is now made, satellite location determination is not necessarily performed. In step **30** an attempt is made at the RMU to determine the location referring to satellite signals only. If such is made possible, the sequence continues through steps **32,** in measuring the reception times of identifiable timing references of available BTSs of a local cellular network, relative to the satellite system time signal. The reception times of the BTSs and satellites signals are then used as input data for ranging purposes, and will therefore be referred to generally as location data if they are not used for locating the RMU singly. In step **33,** the updated synchronization data and the location parameters of the RMU are sent to a location server of the network, to be processed by a processing unit. The synchronization between the BTSs and the satellite system time cannot be used for periods longer than a few tens of seconds because of the drift in the BTS clocks with respect to that of the satellite system. This drift is non linear and cannot be predicted, so that repeated synchronizations must be performed. For GSM systems, the various BTSs are not synchronized among themselves so that a separate matching must be performed for each base station. The clocks of the mobile units are of relative inferior stability and their respective offsets require extra measurements to be made in order to solve range equations, as is the case with regular GPS - based range finding. If no satellite location has been successfully made, the RMU locks on to at least one satellite to obtain at least system time in step **34.** Consequently, in step **36** the reception time of available BTSs are measured by the local RMU clock, using satellite system time as reference. In step **38,** synchronization data and RMU location data are sent to the central processing server for further location processing.

In extreme cases in which not even one satellite can be received well enough to obtain at least system timing, it is still possible to use a AMU according to the invention. In such cases, a margin is left for exclusive use of BTSs as radio sources for ranging and for time synchronization, along the lines of the implementation of the invention disclosed in WO-99 - 21028, the contents of which are incorporated herewith by reference. In other extreme cases of the framework of the invention, the mobile unit requesting location determination may achieve the task by full satellite location procedure, which in such a case renders the mutual synchronization of BTSs redundant.

As regards navigation satellites, downloading system time from one satellite sufficiently represents all the satellites of a navigation constellation a timing download of any other satellites because they are mutually synchronized. In the case that a RMU remains immobile, it is not necessary to do a full satellite location process constantly, even if all the required satellites for the task are available. In such a case, the system time measurement from one satellite is sufficient for use as a reference unit for the cellular system, and the RMU location should be reaffirmed at the location server.

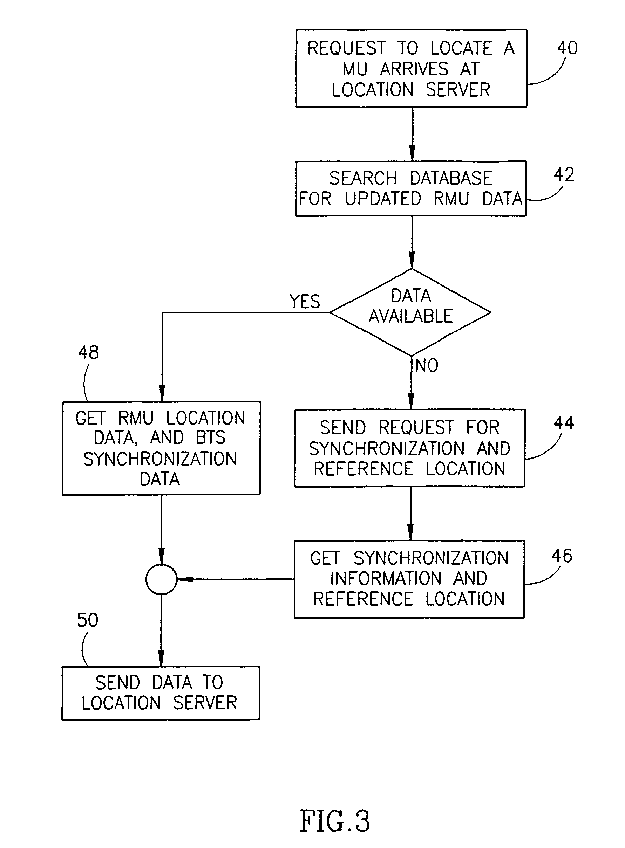

Upon receiving a request for location, the location server of the network sets off a sequence of steps in which new and old data are used. **Fig. 3** to which reference is now made illustrates a sequence according to an embodiment of the invention. In step **40** a request to locate a MU is received in the location server of the network. In step **42** the database is searched for updated RMU data. If no such updated data exists, in step **44** the server sends a request, such as by cell - broadcast or by SMS (short messaging service) to the AMUs for location and synchronization data. In step **46** the location data and synchronization data is passed on to the location server. If RMU data is found in step **42,** the updated synchronization and location data are collected in step **48.** In each case, synchronization data and location data are sent to a location server in step **50.** The actual location processing may be performed in a server of the network system, or it may be performed in the MU.

In the case that two satellites are available for the MU and a RMU, two BSTs are required for location of the MU. The satellites need not be the same satellites for the two MUs. The equation for the range **(R)** between MU and BTS1 is as follows:

R = [Time of reception of BTS1 signal in GPS terms (or synchronized BTS signal) in MU – time of transmission of BTS signal in GPS terms – MU clock bias]xC (speed of light). In symbolic notation:

1.

$$R_{(MU-BTS1)} = (T_{recBTS1} - T_{transBTS1} - C_{lkoffsetMU})xC$$

2.

$$R_{(MU-BTS2)} = (T_{recBTS2} - T_{transBTS2} - C_{lkoffsetMU})xC$$

3.

$$R_{(AMU-BTS1)} = (T_{recBTS1} - T_{transBTS1} - C_{lkoffsetAMU})xC$$

4.

$$R_{(AMU-BTS2)} = (T_{recBTS2} - T_{transBTS2} - C_{lkoffsetAMU})xC$$

Four more measurements to the two satellites complete the set.

5.

$$R_{(MU-GPS1)} = (T_{recMU} - C_{lkoffsetMU})xC$$

6.

$$R_{(MU-GPS2)} = (T_{recMU} - C_{lkoffsetMU})xC$$

7.

$$\mathbf{R}\,(AMU - GPS1) = (\,\mathbf{T}recAMU - \mathbf{C}lkoffsetAMU)xC$$

8.

$$\mathbf{R}\,(AMU - GPS2) = (\mathbf{T}recAMU - \mathbf{C}lkoffsetAMU)xC$$

In this set of equations there are unknown variables: two clock offsets (one for each MU), $\mathbf{T}$transBTS1, $\mathbf{T}$transBTS2 , $\mathbf{R}$ (AMU - GPS2), $\mathbf{R}$ (AMU - GPS1), $\mathbf{R}$ (MU - GPS2), $\mathbf{R}$ (MU - GPS1).

**The privacy issue**

The assignment of MUs for provisional synchronization elements of the network raises issues of protection of privacy. Upon updating of the AMU location parameters in the location server's database, a potential violation of privacy is committed. The implementation of the present invention implies therefore the application of special measures to protect privacy. As a possible remedy for the problem, the information sent to the location server's database would not contain the respective telephone numbers of the associated receivers.

**Claims**

1.  A system for determining location in an unsynchronized cellular network comprising:

    (a) a plurality of radio sources (10, 16, 18) for sending timing references;
    (b) a plurality of mobile units (12, 14) of the unsynchronized cellular network, each said mobile unit capable of receiving both cellular network signals and navigation satellite signals; and
    (c) a location processing unit of the cellular network,

    said plurality of mobile units comprising:

    at least one first mobile unit (12) adapted to perform a first measurement of respective reception times of a plurality of radio signals bearing identifiable timing references received from said radio sources (10, 16, 18) including at least one Base Transceiver Station BTS (16, 18), and
    at least one second mobile unit (14) adapted to perform downloading of satellite system time and a second measurement of respective reception times of said cellular network signals, to calculate synchronization information from said second measurements and said satellite system time, and to calculate parameters related to its own location;
    said location processing unit being adapted to calculate a location of said first mobile unit (12) from said first measurement, said second measurement and said location parameters.

2.  The system of claim 1 wherein said location processing unit is a component of said first mobile unit (12).

3.  The system of claim 1, wherein said location processing unit is a component of a central location server.

4.  A method for determining location of a first mobile unit (12) in an unsynchronized cellular network comprising:

    a) effecting with the first mobile unit (12) first measurements of respective reception times of a plurality of radio signals bearing identifiable timing references received from a plurality of radio sources (10, 16, 18) including at least one base transceiver station BTS (16, 18);
    and **characterized in** further comprising:
    b) providing a second mobile unit (14) capable of receiving both cellular network signals and navigation satellite signals;
    c) downloading (34) satellite system time by said second mobile unit (14);
    d) effecting (36) with said second mobile unit a second measurement of respective reception times of said cellular network signals;

e) calculating synchronization information from said second measurements and said satellite system time;

f) calculating parameters related to the location of said second mobile unit (14); and

g) calculating a location of said first mobile unit (12) from said first measurements, said second measurements, and said location parameters.

**5.** The method of claim 4, wherein one of said plurality of radio sources received by said second mobile unit is a navigation satellite (10).

**6.** The method of claim 4, wherein two of said plurality of radio sources received by said second mobile unit is a navigation satellite (10).

**7.** The method of claim 4, wherein said parameters related to the location of said second mobile unit (14) are obtained exclusively by satellite navigation methods (30).

**8.** The system of claim 1 wherein said second mobile unit (14) is further operative to transfer (38) said synchronization information to said location processing unit.

**9.** The method of claim 4 further comprising:

h) transferring (38) by said second mobile unit (14) to a location processing unit at least one of said satellite system time, said second measurements, said synchronization information, said location parameters and location data.

**10.** The method of claim 4 wherein said first mobile unit (12) receives signals of at least one base station (16) received by said second mobile unit.

**11.** The method of claim 4 wherein said calculating synchronization information is performed in at least one of said first mobile unit (12) and a server in the cellular network.

**Patentansprüche**

**1.** Ein System zum Bestimmen eines Standorts in einem nicht synchronisierten zellularen Netz, das folgendes umfasst:

(a) eine Vielzahl von Funkquellen (10, 16, 18), um Taktungsreferenzen zu senden;

(b) eine Vielzahl von mobile Einheiten (12, 14) des nicht synchronisierten zellularen Netzes, wobei jede mobile Einheit in der Lage ist, sowohl Signale des zellularen Netzes als auch Navigationssatelliten-Signale zu empfangen; und

(c) eine Standortverarbeitungseinheit des zellularen Netzes,

wobei die Vielzahl von mobilen Einheiten folgendes umfasst:

mindestens eine erste mobile Einheit (12), die ausgebildet ist, um eine erste Messung der jeweiligen Empfangszeiten von einer Vielzahl von Funksignalen durchzuführen, die identifizierbare Taktungsreferenzen tragen, die von den Funkquellen (10, 16, 18) empfangen werden, die mindestens eine Basis-Transceiver-Station BTS (16, 18) einschließen, und

mindestens eine zweite mobile Einheit (14), die ausgebildet ist, um das Herunterladen der Satellitensystemzeit und eine zweite Messung der jeweiligen Empfangszeiten von den Signalen des zellularen Netzes durchzuführen, damit aus den zweiten Messungen und der Satellitensystemzeit die Synchronisationsinformation berechnet wird und damit die Parameter berechnet werden, die ihren eigenen Standort betrifften;

wobei die Standortverarbeitungseinheit ausgebildet ist, um aus der ersten Messung, der zweiten Messung und den Standortparametern einen Standort der ersten mobilen Einheit (12) zu berechnen.

**2.** Das System nach Anspruch 1, worin die Standortverarbeitungseinheit eine Komponente der ersten mobilen Einheit (12) ist.

**3.** Das System nach Anspruch 1, worin die Standortverarbeitungseinheit eine Komponente eines zentralen Standortservers ist.

**4.** Ein Verfahren zum Bestimmen des Standorts einer ersten mobilen Einheit (12) in einem nicht synchronisierten zellularen Netz, das folgendes umfasst:

a) das Durchführen mit der ersten mobilen Einheit (12) von ersten Messungen von jeweiligen Empfangszeiten von einer Vielzahl von Funksignalen, die identifizierbare Taktungsreferenzen tragen, die von einer Vielzahl von Funkquellen (10, 16, 18) empfangen werden, die mindestens eine Basis-Transceiver-Station BTS (16, 18) einschließen;

und **dadurch gekennzeichnet, dass** es weiter folgendes einschließt:

(b) das Bereitstellen einer zweiten mobilen Einheit (14), die in der Lage ist, sowohl Signale des zellularen Netzes als auch Navigationssatellitensignale zu empfangen;

(c) das Herunterladen (34) der Satellitensystemzeit durch die zweite mobile Einheit (14);

(d) das Durchführen (36) mit der zweiten mobilen Einheit einer zweiten Messung der jeweiligen Empfangszeiten der Signale des zellularen Netzes;

(e) das Berechnen der Synchronisationsinformation aus den zweiten Messungen und der Satellitensystemzeit;

(f) das Berechnen der Parameter, die den Standort der zweiten mobilen Einheit (14) betreffen; und

(g) das Berechnen eines Standorts der ersten mobilen Einheit (12) aus den ersten Messungen, den zweiten Messungen und den Standortparametern.

**5.** Das Verfahren nach Anspruch 4, worin eine von der Vielzahl von Funkquellen, die von der zweiten mobilen Einheit empfangen werden, ein Navigationssatellit (10) ist.

**6.** Das Verfahren nach Anspruch 4, worin zwei von der Vielzahl von Funkquellen, die von der zweiten mobilen Einheit empfangen werden, ein Navigationssatellit (10) ist.

**7.** Das Verfahren nach Anspruch 4, worin die den Standort der zweiten mobilen Einheit (14) betreffenden Parameter ausschließlich durch Satellitennavigationsverfahren (30) erhalten werden.

**8.** Das System nach Anspruch 1, worin die zweite mobile Einheit (14) weiterhin wirksam ist, um die Synchronisationsinformation an die Standortverarbeitungseinheit zu überführen (38).

**9.** Das Verfahren nach Anspruch 4, das weiterhin folgendes umfasst:

(h) das Überführen (38) durch die zweite mobile Einheit (14) an eine Standortverarbeitungseinheit von mindestens der Satellitensystemzeit, den zweiten Messungen, der Synchronisationsinformation, den Standortparametern oder den Standortdaten.

**10.** Das Verfahren nach Anspruch 4, worin die erste mobile Einheit (12) Signale von mindestens einer Basisstation (16) empfängt, die durch die zweite mobile Einheit empfangen werden.

**11.** Das Verfahren nach Anspruch 4, worin das Berechnen der Synchronisationsinformation zumindest in der ersten mobilen Einheit (12) oder in einem Server im zellularen Netz durchgeführt wird.

**Revendications**

**1.** Système pour la détermination de position dans un réseau cellulaire non synchronisé, comprenant :

(a) une pluralité de sources radio (10, 16, 18) pour envoyer des références de temps ;

(b) une pluralité d'unités mobiles (12, 14) du réseau cellulaire non synchronisé, chaque dite unité mobile pouvant recevoir à la fois des signaux du réseau cellulaire et des signaux de satellites de navigation ; et

(c) une unité de traitement de localisation du réseau cellulaire ;

la dite pluralité d'unités mobiles comprenant :

au moins une première unité mobile (12) prévue pour effectuer une première mesure des temps de réception respectifs d'une pluralité de signaux radio portant des références de temps identifiables reçues en provenance des dites sources radio (10, 16, 18) incluant au moins une Station d'Emission-Réception de Base BTS (16; 18) ; et

au moins une deuxième unité mobile (14) prévue pour effectuer un téléchargement du temps du système de satellites et une deuxième mesure des temps de réception respectifs des dits signaux du réseau cellulaire, pour calculer des informations de synchronisation à partir des dites deuxièmes mesures et du dit temps de système de satellites, et pour calculer les paramètres liés à sa propre position;

la dite unité de traitement de position étant prévue pour calculer une position de la dite première unité mobile (12) à partir de la dite première mesure, de la dite deuxième mesure et des dits paramètres de position.

2. Système selon la revendication 1, dans lequel la dite unité de traitement de position est un composant de la dite première unité mobile (12).

3. Système selon la revendication 1, dans lequel la dite unité de traitement de position est un composant d'un serveur de position central.

4. Procédé pour déterminer la position d'une première unité mobile (12) dans un réseau cellulaire non synchronisé, comprenant :

(a) l'exécution, avec la première unité mobile (12), de premières mesures de temps de réception respectifs d'une pluralité de signaux radio portant des références de temps identifiables reçus en provenance d'une pluralité de sources radio (10, 16, 18) incluant au moins une station d'émission-réception de base BTS (16, 18) ; **caractérisé en ce qu'**il comprend en outre :

(b) l'utilisation d'une deuxième unité mobile (14) pouvant recevoir à la fois des signaux du réseau cellulaire et des signaux de satellites de navigation ;

(c) le téléchargement (34) du temps du système de satellites par la dite deuxième unité mobile (14) ;

(d) l'exécution (36), avec la dite deuxième unité mobile, d'une deuxième mesure des temps de réception respectifs des dits signaux du réseau cellulaire ;

(e) le calcul d'informations de synchronisation à partir des dites deuxièmes mesures et du dit temps de système de satellites ;

(f) le calcul de paramètres liés à la position de la dite deuxième unité mobile (14) ; et

(g) le calcul d'une position de la dite première unité mobile (12) à partir des dites premières mesures, des dites deuxièmes mesures et des dits paramètres de localisation.

5. Procédé selon la revendication 4, dans lequel une de la dite pluralité de-sources radio reçues par la dite deuxième unité mobile est un satellite de navigation (10).

6. Procédé selon la revendication 4, dans lequel deux de la dite pluralité de sources radio reçues par la dite deuxième unité mobile sont un satellite de navigation (10).

7. Procédé selon la revendication 4, dans lequel les dits paramètres liés à la position de la dite deuxième unité mobile (14) sont obtenus exclusivement par des procédés de navigation par satellite (30).

8. Système selon la revendication 1, dans lequel la dite deuxième unité mobile (14) fonctionne en outre pour transférer (38) les dites informations de synchronisation à la dite unité de traitement de position.

9. Procédé selon la revendication 4, comprenant en outre :

(h) le transfert (38) par la dite deuxième unité mobile (14) à une unité de traitement de position d'au moins un du dit temps de système de satellites, des dites deuxièmes mesures, des dites informations de synchronisation, des dits paramètres de position et des données de position.

10. Procédé selon la revendication 4, dans lequel la dite première unité mobile (12) reçoit des signaux d'au moins une station de base (16) reçus par la dite deuxième unité mobile.

11. Procédé selon la revendication 4, dans lequel le dit calcul des informations de synchronisation est effectué dans au moins un de la dite première unité mobile (12) et d'un serveur dans le réseau cellulaire.

GPS1 10

18

16

12

MU1

14

RMU

FIG.1

ATTEMPT TO LOCATE AMU
USING A GPS ONLY APPROACH — 20

NO — LOCATION
OBTAINED

YES

RECEPTION TIME OF BTSS
MEASURED, IN GPS TERMS — 22

SEND SYNCHRONIZATION DATA AND
RMU LOCATION PARAMETERS TO
CENTRAL PROCESSING SERVER — 24

FIG.2A

ATTEMPT TO LOCATE
RMU IMPLEMENTING A
GPS ONLY APPROACH
— 30

NO ← LOCATION
OBTAINED

YES

LOCK ON TO AT LEAST
ONE SATELLITE AND
OBTAIN AT LEAST
SATELLITE SYSTEM TIME
34

MEASURE RECEPTION TIME
OF BTSS IN GPS TERMS
32

MEASURE RECEPTION
TIME OF BTSS SIGNALS,
IN GPS TERMS
36

SEND SYNCHRONIZATION
DATA AND RMU LOCATION
PARAMETERS TO CENTRAL
PROCESSING SERVER
33

SEND SYNCHRONIZATION
DATA AND RMU LOCATION
DATA TO CENTRAL
PROCESSING SERVER
38

FIG.2B

REQUEST TO LOCATE A
MU ARRIVES AT
LOCATION SERVER — 40

SEARCH DATABASE
FOR UPDATED RMU DATA — 42

DATA
AVAILABLE

YES

NO

48

GET RMU LOCATION
DATA, AND BTS
SYNCHRONIZATION
DATA

SEND REQUEST FOR
SYNCHRONIZATION AND
REFERENCE LOCATION — 44

GET SYNCHRONIZATION
INFORMATION AND
REFERENCE LOCATION — 46

50

SEND DATA TO
LOCATION SERVER

FIG.3